# FASCICULE DE BREVET EUROPEEN

(11) **EP 0 626 224 B1**
(45) Date de publication et mention de la délivrance du brevet: **10.03.1999**
(21) Numéro de dépôt: 94420144.1
(22) Date de dépôt: 17.05.1994
(51) Int. Cl.: B22F 3/22, B28B 1/00, B28B 1/26, C04B 35/00

(54) **Procédé de moulage par injection de barbotines et dispositif pour sa mise en oeuvre**
Schlickerspritzgiessverfahren und Vorrichtung zur Durchführung des Verfahrens
Process for injection moulding a slip and apparatus for carrying out the process

(30) Priorité: 24.05.1993 FR 9306129
(43) Date de publication de la demande: 30.11.1994
(73) Titulaire: IMPAC TECHNOLOGIES, F-92100 Boulogne-Billancourt (FR)
(72) Inventeur: Quichaud, Claude, F-92100 Ville d'Avray (FR); Peytavin, Pierre Guy, F-92200 Neuilly S/Seine (FR); David, François, F-14123 IFS (FR)
(74) Mandataire: Desolneux, Jean-Paul Charles

(56) Documents cités:
- WO-A-88/07902
- WO-A-88/07903
- DE-A- 4 037 258

## Description

Le procédé et le dispositif suivant l'invention concernent, de la façon la plus générale, la réalisation en série d'ébauches de pièces crues à partir d'une barbotine comprenant une phase solide divisée, contenant au moins une poudre métallique ou céramique mise en suspension dans une phase liquide aqueuse ou non aqueuse.

Le procédé consiste à injecter la barbotine dans un moule refroidi à température inférieure à la température de solidification de la barbotine, puis, après solidification de l'ébauche ainsi obtenue à éjecter celle-ci du moule. Cette ébauche crue est ensuite séchée sous vide puis frittée à température adaptée à sa composition pour obtenir la pièce finie.

Différents travaux ont montré que ce procédé permet d'obtenir, après frittage, des pièces ayant une densité élevée et de très bonnes caractéristiques (physiques mécaniques, magnétiques, électriques etc...)

Les demandes de brevet publiées WO 88/07902 et WO 88/07903 décrivent de façon très détaillée et à titre d'exemple les conditions de réalisation de barbotines contenant des poudres métalliques ou non métalliques.

La première de ces demandes concerne l'utilisation, comme phase liquide, d'eau additionnée de différents composés jouant le rôle de cryoprotecteurs et de dispersants et la deuxième demande utilise comme phase liquide des composés non aqueux.

Les exemples donnés dans ces deux documents montrent que, sauf dans les cas où la suspension de la poudre, ou mélange de poudres, est effectuée dans un liquide organique à température de solidification élevée, on effectue le moulage de la barbotine dans un moule porté à une température très inférieure à 0°C, afin que l'écart de température entre le moule et la température de solidification de la barbotine soit suffisamment élevé pour obtenir une solidification très rapide de l'ébauche avec des risques réduits d'hétérogénéisation du mélange solide-liquide.

Dans les exemples donnés dans la demande WO 88/07902, on utilise une température de moule de - 78°C.

Cette façon d'opérer permet d'obtenir des pièces crues très solides, faciles à manipuler dont on effectue ensuite le séchage par sublimation sous vide sans risques de fissuration ou de déformation. Au cours du frittage, on peut atteindre des densités réelles très élevées de l'ordre de 99 % ou davantage, de la densité théorique, qu'on ne sait pas atteindre par les méthodes habituelles de compression et frittage de poudres, ou par les procédés de moulage par injection classiques utilisant des liants thermoplastiques.

Le refroidissement des moules est effectué de façon connue par exemple par circulation d'un fluide caloporteur refroidi par des moyens connus.

On constate que, même en réduisant au minimum le temps d'ouverture d'un moule ainsi refroidi, pour extraire l'ébauche solidifiée, il se forme des dépôts de glace tant sur les plans de joint du moule que sur les parois. Ces dépôts empêchent le fonctionnement normal des plans de joints, croissent à chaque cycle de réalisation d'une pièce et rapidement l'épaisseur devient trop importante pour pouvoir poursuivre les opérations. Ces dépôts provoquent rapidement l'arrêt du fonctionnement de la machine.

On a envisagé pour remédier à cet inconvénient, de loger l'ensemble de l'installation dans une grande enceinte étanche dans laquelle le point de rosée de l'air ou du gaz contenu serait abaissé au-dessous de la température du moule.

Une telle enceinte est difficile à réaliser car elle doit contenir non seulement le moule mais les moyens d'ouverture et de fermeture de celui-ci, les moyens d'injection de la barbotine dans le moule et aussi les moyens d'éjection puis de réception et de transfert de la pièce à l'extérieur de l'enceinte.

Comme indiqué plus haut, il est nécessaire pour obtenir des pièces de qualité, d'avoir une température de moule aussi basse que possible, c'est-à-dire atteignant dans la pratique un niveau égal ou inférieur à -20°C et se trouvant de préférence approximativement dans un intervalle compris entre -20 et -100°C. On comprend qu'il est extrêmement difficile de réaliser une enceinte de grandes dimensions dont le gaz contenu ait un point de rosée inférieur à la température d'un moule se trouvant dans l'intervalle indiqué. ll est surtout très difficile de concevoir une telle enceinte dont le point de rosée du gaz contenu soit maintenu à une telle valeur au cours de la production en série, suivant un cycle rapide, d'ébauches crues ainsi injectées.

On a recherché la possibilité d'éviter la formation de glace sur la paroi du moule notamment à chaque ouverture de celui-ci sans avoir à utiliser des enceintes étanches de grandes dimensions et sans utiliser des dispositifs complexes de saisie des ébauches crues et de transfert de celles-ci vers l'extérieur.

On a cherché plus particulièrement à mettre au point un procédé et un dispositif permettant d'atteindre des cadences de fabrication très élevées avec des durées de cycle suffisamment courtes pour pouvoir produire environ 2 ébauches crues à la minute ou plus.

On a cherché également à mettre au point un procédé et un dispositif qui permettent facilement le changement des moules et également un dispositif qui soit dans toutes ses parties facile à nettoyer et entretenir en service.

Le procédé et le dispositif qui font l'objet de l'invention permettent d'atteindre ces résultats.

L'invention concerne un procédé tel que defini dans la revendication 1, et un dispositif tel que défini dans la revendication 18. Les modes de réalisation préféres sont définis dans les revendications dépendantes.

L'invention concerne un procédé de production à partir d'une barbotine, d'ébauches crues prévues pour la réalisation par séchage et frittage de pièces frittées. Selon ce procédé, on injecte une barbotine comprenant une phase solide contenant au moins une poudre métallique ou non métallique, en suspension dans une phase liquide, dans un moule porté à une température inférieure à 0°C et inférieure à la température de solidification de cette phase liquide, puis après solidification de l'ébauche crue, on éjecte celle-ci du moule.

On entend par poudres dans le présent brevet toutes poudres quel que soit leur mode d'obtention et leur géométrie notamment dans des dimensions allant de dimensions nanométriques au millimètre et également des fibres métalliques ou non métalliques n'excédant pas 5 mm de longueur.

Conformément à l'invention, on loge à l'intérieur d'une enceinte à parois étanches au moins les parties fixes et mobiles du moule ainsi que les parties mobiles d'au moins un moyen qui assure la fermeture du moule, son maintien en position de fermeture puis son ouverture ainsi que les moyens d'éjection, de réception de l'ébauche éjectée ainsi que les moyens de transfert de cette ébauche en direction d'un orifice de sortie de l'enceinte et on réalise à l'intérieur de cette enceinte un courant gazeux qui circule au voisinage des parois du moule, ce courant étant créé par la distribution d'un flux gazeux sec de point de rosée inférieur à la température du moule, au moins un orifice de sortie étant réalisé dans la paroi de l'enceinte, cet orifice étant ouvert de façon continue ou discontinue.

De préférence, le courant gazeux est réalisé par émission à l'intérieur de l'enceinte au voisinage du moule.

De préférence, on crée le courant gazeux au moyen d'un distributeur qui permet de répartir le flux gazeux sec le long des parois du moule grâce à un ou plusieurs orifices convenablement orientés. De préférence, on utilise par exemple, un tube fermé à une extrémité et relié par l'autre à la source de gaz sec, ce tube étant, de préférence, replié en anneau ou en quadrilatère et pourvu d'orifices répartis le long d'une génératrice en direction du moule.

De préférence, le flux gazeux est orienté en direction du moule.

Le flux gazeux sec ainsi distribué peut être de l'air, de l'azote, de l'argon ou tout autre gaz, ou mélange de gaz, ayant des propriétés physico-chimiques compatibles avec la barbotine.

De préférence, l'orifice de sortie est réalisé dans la paroi de l'enceinte en un point situé au delà du moule par rapport à la zone de distribution du flux gazeux sec.

L'orifice de sortie peut être situé à la partie inférieure de l'enceinte, à l'extrémité inférieure d'une goulotte le long de laquelle l'ébauche crue éjectée du moule descend puis franchit cet orifice ouvert en permanence.

De façon avantageuse, on utilise un plateau-récepteur mobile pourvu d'un moyen amortisseur de l'impact de l'ébauche tel qu'une surface de réception déformable pour amortir la chute de l'ébauche crue, puis on transfert cette ébauche jusqu'à un point de sortie qu'on aménage de façon à limiter les risques de pénétration de l'humidité contenue dans l'air extérieur à l'intérieur de l'enceinte.

En option, afin d'amortir davantage l'impact de l'ébauche sur le moyen de réception, on munit celui-ci d'un moyen élévateur qui réduit la hauteur de chute de l'ébauche.

De façon avantageuse, la surface de réception déformable est perméable et on introduit à l'intérieur de ce plateau un flux de gaz sec qui traverse cette surface de bas en haut en la gonflant. On ajuste ce débit de gaz sec à travers cette surface de réception pour qu'il ne perturbe pas le courant gazeux principal provenant du distributeur.

Lorsque l'écoulement du gaz contenu dans l'enceinte par l'orifice de sortie des ébauches s'effectue de façon discontinue lors de l'ouverture de l'orifice de sortie et s'avère insuffisant, on prévoit avantageusement un orifice supplémentaire équipé d'une vanne à contrôle manuel ou automatique qui permet d'ajuster avec précision le débit de sortie de gaz de l'enceinte.

De préférence, on contrôle la surpression existant dans l'enceinte de façon automatique en ajustant les débits d'entrée du flux gazeux sec et de sortie du gaz de l'enceinte afin de maintenir une surpression déterminée tout en réalisant un courant de gaz sec autour du moule garantissant un point de rosée inférieur à la température de ce moule dans la zone de celui-ci.

Le moyen assurant la fermeture du moule, son maintien en position de fermeture et son ouverture peut être, par exemple, un vérin ou une genouillère.

L'invention concerne aussi un dispositif permettant la mise en oeuvre du procédé suivant l'invention. Ce dispositif s'applique à toutes machines de moulage, généralement appelées presses à injection, aptes à injecter la barbotine utilisée dans l'invention et en particulier de façon non limitative, s'adapte aussi bien aux machines de moulage de barbotines dont les deux parties du moule comportent un plan de fermeture vertical et qui sont donc fermées ou ouvertes par déplacement de l'une de ces parties suivant un axe horizontal qu'aux machines dont les deux parties du moule ont un plan de fermeture horizontal, l'axe d'ouverture ou de fermeture étant vertical. L'axe d'injection de la barbotine est le plus souvent parallèle, mais pas nécessairement, à l'axe d'ouverture/fermeture du moule, l'injection s'effectuant à travers un plateau fixe portant la partie fixe du moule. Cependant, il est possible aussi d'effectuer l'injection dans le plan de fermeture du moule.

Ce dispositif s'adapte plus généralement à toute presse à injecter dans laquelle il est nécessaire de maintenir le moule à une température inférieure à 0°C.

Selon l'invention, les parties fixes et mobiles du moule, ainsi que les parties mobiles d'au moins un vérin, sont logées à l'intérieur d'une enceinte étanche.

De préférence, une face de cette enceinte étanche est solidaire du plateau fixe sur lequel est montée une partie du moule et un orifice ménagé dans la paroi de l'enceinte, dans le plateau fixe et dans la partie fixe du moule permet l'injection de la barbotine au moyen d'un moyen d'injection tel qu'un injecteur situé à l'extérieur de l'enceinte. Une telle disposition permet le nettoyage ou toute intervention sur le moyen d'injection de façon aisée, si nécessaire en cours de travail, sans nécessiter une ouverture de l'enceinte et sans perturber l'atmosphère sèche au voisinage du moule.

De préférence, à la fin de chaque injection de barbotine, on recule l'injecteur pour éviter de refroidir son extrémité à basse température.

Les deux parties du moule sont refroidies par circulation d'un fluide caloporteur refroidi à très basse température ou par la détente d'un gaz liquéfié. Le groupe frigorigène est disposé à l'extérieur de l'enceinte et relié aux deux parties du moule par des canalisations calorifugées. On ajuste, de préférence, la température du moule entre 0°C et -100°C et de préférence entre -20°C et -100°C. La pression d'injection de la barbotine est ajustée en fonction de la plus ou moins grande viscosité de la barbotine et de la plus ou moins grande complexité de forme des pièces à réaliser.

La fermeture et l'ouverture du moule sont obtenues de façon connue par un moyen de fermeture et d'ouverture tel que par exemple un vérin hydraulique à double effet, le plateau fixe étant solidarisé avec le vérin par des tiges de retenue le long desquelles coulisse le plateau mobile. Le moyen de fermeture et d'ouverture peut également être, par exemple, une genouillère.

La barbotine mise en oeuvre est réalisée de façon connue, comme cela est décrit dans plusieurs documents tels que les deux documents WO cités antérieurement. Les méthodes d'injection sont également bien connues de l'homme du métier.

Une atmosphère gazeuse sèche de point de rosée inférieur à la température du moule, est réalisée au voisinage des parois du moule. Cette atmosphère est créée par au moins un moyen de distribution de fluide gazeux à point de rosée inférieur à la température d'utilisation du moule, moyen de distribution situé à l'intérieur de l'enceinte. Un tel moyen de distribution du flux sec gazeux appelé par la suite distributeur est de préférence situé au voisinage du moule. Dans une machine à axe de fermeture horizontal, ce distributeur est de préférence, situé entre la partie supérieure du moule et la paroi supérieure de l'enceinte. Ce peut être un tube percé de trous plus ou moins espacés le long d'une génératrice et orientés de façon à émettre le gaz sec vers le moule.

Avantageusement le tube est disposé en couronne ou en quadrilatère pour répartir au mieux le gaz sec. On peut utiliser aussi un distributeur annulaire comportant deux lèvres concentriques entre lesquelles est réalisée une mince fente annulaire. La source de flux gazeux sec est disposée à l'extérieur de l'enceinte et reliée au distributeur par un tuyau traversant la paroi de l'enceinte. Les moyens de réalisation d'air sec à point de rosée inférieur à 0°, -40°, -60° ou même -100°C ou à toute autre température intermédiaire entre ces valeurs, sont bien connus de l'homme du métier.

De même, on peut utiliser au lieu d'air, un autre gaz tel que l'azote, l'argon ou tout autre gaz ou mélange de gaz dont le point de rosée est inférieur à la température du moule.

Si on réalise un débit de gaz sec suffisant, il est possible de ménager, par exemple, à l'extrémité inférieure de l'enceinte dans le cas d'une machine de moulage à axe d'ouverture horizontal, un orifice ouvert en permanence auquel est relié une goulotte disposée de façon à recevoir les ébauches crues éjectées après ouverture du moule.

Les moyens d'éjection de telles pièces moulées sont bien connus de l'homme du métier et sont, le plus souvent, des doigts poussés, par exemple, par de petits vérins qui sont engagés dans la paroi du moule en appui contre la pièce injectée et exercent, après ouverture du moule, la poussée voulue pour provoquer l'éjection. La goulotte conduit ainsi la pièce éjectée qui franchit l'orifice de l'enceinte.

Les essais effectués montrent que dans le cas de petites pièces relativement rigides, il est possible d'extraire ainsi les ébauches crues sans introduire de défauts sur celles-ci.

A condition de maintenir un débit de gaz sec suffisant, dans les conditions décrites ci-dessus pour l'extraction des ébauches, on maintient facilement pendant un poste de travail d'une durée de 8 heures un point de rosée du gaz contenu dans l'enceinte dans la zone du moule, au-dessous de la température de celui-ci, laquelle peut être réglée à toute valeur comprise entre 0°C et -100°C par exemple -40°C, -50°C, -60°C, etc...

Pour des pièces de plus grandes dimensions, les dimensions de l'orifice de sortie nécessitent l'introduction par le distributeur d'un flux gazeux sec de trop fort débit. Ce flux a l'inconvénient de réchauffer les deux parties du moule et d'augmenter ainsi la consommation d'énergie de production du froid. Pour limiter ce réchauffement, on peut revêtir les parois extérieures des moules d'une couche isolante mais cela ne suffit pas car pendant les quelques secondes d'ouverture le contact est direct. De plus, ce flux d'air sec réchauffe aussi les ébauches crues ce qui n'est pas souhaitable non plus. Différents dispositifs décrits ci-dessous permettent la réception et le transfert à l'extérieur des ébauches crues dans des conditions optimales, notamment sans introduction d'humidité dans l'enceinte.

De préférence, on utilise pour recevoir l'ébauche crue éjectée du moule, un plateau récepteur mobile comportant une surface de réception déformable élastiquement apte à recevoir, sans heurt brutal, l'ébauche crue.

De préférence encore, on injecte au-dessous de la surface de réception déformable, un gaz sec ayant avantageusement les mêmes caractéristiques que le gaz qui est introduit dans l'enceinte de façon à la gonfler et on confère à cette surface de réception une perméabilité suffisante pour que le courant de gaz sec qui parcourt cette surface de bas en haut, la protège au cours du transfert de ce plateau-récepteur vers un orifice de sortie.

On utilise avantageusement pour la réalisation de cette surface de réception déformable et perméable une matière souple telle qu'une toile tissée ou non tissée en une fibre naturelle ou artificielle ou un mélange de fibres naturelle et artificielle.

On peut envisager aussi d'utiliser une surface réalisée en un élastomère perforé de trous de faible diamètre ou aussi une matière plastique ainsi perforée.

Suivant un premier mode de réalisation, le transfert du plateau-récepteur chargé d'une ébauche est effectué en intégrant ce plateau-récepteur à un tiroir mobile apte à coulisser à travers un orifice de sortie de même section que le tiroir, pourvu d'un joint à lèvre ou d'un joint brosse apte à limiter la déperdition de gaz vers l'extérieur de l'enceinte. Le plateau-récepteur est placé entre deux compartiments parallélipipédiques fermés et étanches, de même section que l'orifice de sortie de l'enceinte. Lorsque le plateau-récepteur est en position de réception d'une ébauche crue éjectée, l'un des deux compartiments est en position d'obturation de l'orifice de sortie ; en exerçant une traction sur le tiroir, le plateau-récepteur sort de l'enceinte et l'orifice de sortie est alors obturé par le deuxième compartiment. On remarque que l'orifice de sortie de l'enceinte est partiellement ouvert au passage du plateau-récepteur, soit dans un sens, soit dans l'autre. Une telle ouverture partielle risque d'être insuffisante pour assurer un courant gazeux régulier à travers l'enceinte et il pourra être avantageux de prévoir un orifice supplémentaire dans la paroi de l'enceinte contrôlé par une vanne afin de régulariser l'écoulement du courant gazeux plus particulièrement dans la zone du moule et de ses guidages. Les déplacements du tiroir peuvent être commandés par un vérin ou encore par une courroie qui peut être crantée ou non et entraînée par moteur électrique. Le plateau-récepteur est, de préférence, alimenté en permanence par un tuyau d'alimentation souple pour l'introduction de gaz sec qui accompagne le tiroir dans ses déplacements.

Un autre mode de transfert du plateau-récepteur consiste à relier celui-ci à un bras articulé sur une portée solidaire d'un châssis coulissant. Un vérin vertical disposé dessous le plateau et prenant appui sur le châssis permet de soulever le plateau pour diminuer la hauteur de chute de l'ébauche crue éjectée du moule. Après retour en position basse, pour passer au-dessous d'un tirant, un vérin ou une courroie sans fin déplace le châssis jusqu'à l'amener au-dessous d'un orifice de sortie fermé par un couvercle et le vérin permet d'appliquer le plateau contre le contour annulaire de l'orifice. Le plateau est avantageusement muni sur ses bords d'un joint d'étanchéité en élastomère qui vient faite joint contre la paroi de l'enceinte. Comme dans le cas précédent, un tuyau souple permet d'alimenter le plateau en gaz sec de façon à maintenir un courant de gaz sec au-dessous de la surface de réception déformable et perméable, ce courant évitant ou limitant la pénétration d'humidité venant de l'air extérieur. Le couvercle de l'orifice de sortie est lui-même pourvu d'un joint étanche afin d'éviter les fuites non contrôlées du gaz contenu dans l'enceinte quand le plateau-récepteur est ramené à sa position initiale.

Suivant un autre mode de réalisation du dispositif de réception et de transfert de l'ébauche crue, on peut placer le plateau-récepteur au-dessus d'un châssis auquel il est relié par un moyen élévateur constitué par exemple par un soufflet étanche en élastomère. Ce soufflet est replié en l'absence de pression interne, par exemple, sous l'action de ressorts de rappel, mais peut s'expanser par introduction d'un gaz comprimé circulant dans un tuyau souple relié à une source extérieure. On élève ainsi le plateau-récepteur pour diminuer la hauteur de chute de l'ébauche crue éjectée du moule, puis en faisant tomber la pression, le plateau redescend se plaquer sur le châssis et peut être transféré sous l'action d'un vérin ou d'une courroie sans fin jusqu'au voisinage d'un orifice réalisé dans la paroi de l'enceinte et fermé, comme dans le cas précédent, par un couvercle étanche.

En élevant à nouveau la pression dans le soufflet, on met en appui étanche le bord du plateau pourvu d'un joint en élastomère avec la paroi de l'enceinte autour de l'orifice d'extraction. En enlevant ensuite le couvercle, on extrait la pièce.

Pendant cette période d'ouverture au moins, on maintient un courant de gaz sec à travers la surface de réception déformable et perméable pour empêcher la pénétration d'humidité dans l'enceinte. Ce courant de gaz sec provient d'un tuyau souple qui alimente le plateau-récepteur indépendamment de l'alimentation du soufflet. Après avoir dégonflé à nouveau celui-ci, on le ramène à sa position initiale.

Dans le cas de ce mode de réalisation comme dans le précédent, il pourra être souhaitable de munir la paroi de l'enceinte d'un orifice contrôlé par vanne afin de créer une fuite de gaz de débit contrôlé pour réguler le débit du courant gazeux qui circule dans la zone du moule.

En effet, c'est un écoulement régulier d'un gaz sec de relativement faible débit avec une légère surpression qui permet de garantir un point de rosée inférieur à la température du moule et de ses guidages dans la zone où se trouvent ceux-ci.

Suivant un dernier mode de réalisation du transfert d'un plateau-récepteur muni d'une surface de réception déformable et perméable ainsi que avantageusement, d'une alimentation en gaz sec par tuyau souple pour la circulation de ce gaz de bas en haut à travers cette surface de réception, on loge ce plateau-récepteur dans un couloir de guidage qui traverse de façon étanche l'enceinte et dont l'extrémité est fermée de façon étanche également. Une courroie sans fin à l'intérieur de l'enceinte permet de pousser le plateau-récepteur, après réception de l'ébauche crue jusqu'au fond du couloir. Une membrane en élastomère logée au bout du couloir au-dessous du plateau-récepteur permet de soulever ce plateau-récepteur en position de saisie des ébauches et de mettre les bords de celui-ci en appui étanche, grâce à un joint, contre un rebord du couloir autour d'un orifice supérieur de celui-ci. Un couvercle amovible muni d'un joint d'étanchéité qui obture cet orifice permet d'extraire l'ébauche. Après obturation de l'orifice, un tuyau souple relié au couvercle et à une pompe peut permettre d'extraire l'air contenu dans le plateau-récepteur au-dessus de la surface réceptrice en même temps qu'on injecte de l'air sec au-dessous. On réalise donc ainsi un balayage très efficace qui supprime toute pénétration d'humidité dans l'enceinte.

Un orifice ménagé à la partie inférieure de l'enceinte est contrôlé par une vanne comme dans le cas précédent.

On peut adapter aussi le dispositif suivant l'invention au cas où la fermeture et l'ouverture du moule sont réalisées par une machine de moulage à axe vertical, la fermeture des deux parties du moule étant réalisée suivant un plan horizontal. On fait circuler, par exemple, sur des glissières un châssis coulissant horizontalement, châssis qui est muni d'un bras au bout duquel est placé le plateau-récepteur. En position de réception, le plateau-récepteur est un peu au-dessus de la partie fixe du moule et dans l'axe du dispositif de façon à recevoir l'ébauche éjectée à partir de la partie mobile de ce moule. Un moyen de translation du châssis tel que vérin ou courroie crantée déplace latéralement le châssis et le plateau et les introduit dans une extension latérale de l'enceinte. Le plateau-récepteur ayant reçu l'ébauche est ainsi amené au-dessous d'un orifice de sortie muni d'un obturateur étanche. Un vérin prenant appui sur le châssis soulève le plateau-récepteur et le met en contact étanche avec la paroi de l'enceinte autour de l'orifice. Il est alors possible de sortir l'ébauche crue. Le plateau-récepteur est alimenté en gaz sec par un tuyau souple. Le couvercle est également relié par un tuyau souple à la même source de gaz sec, ce qui permet d'effectuer une purge pendant la fermeture.

Comme dans les modes précédents de réalisation de dispositif suivant l'invention, il pourra être prévu un orifice contrôlé par une vanne permettant de réaliser un courant gazeux régulier autour du moule et de ses guidages.

De nombreuses variantes peuvent être apportées au procédé et/ou dispositif qui ne sortent pas du domaine de l'invention.

Les exemples et les figures ci-après décrivent, de façon non limitative, des modes de réalisation du procédé et du dispositif suivant l'invention.
La figure 1 est une vue schématique en coupe longitudinale d'un dispositif de moulage par injection d'ébauches à partir de barbotine comportant une goulotte de sortie avec vérin de fermeture à axe horizontal et balayage par courant gazeux sec suivant l'invention.
La figure 2 est une coupe transversale de la figure 1 suivant le plan A-A.
La figure 3 est une vue schématique en coupe transversale d'un dispositif de moulage à axe horizontal suivant l'invention équipé d'un tiroir de transfert d'un plateau-récepteur suivant l'invention.
La figure 4 est une vue schématique en coupe transversale d'un dispositif de moulage à axe horizontal suivant l'invention équipé d'un châssis de transfert suivant l'invention.
La figure 5 est une vue d'un détail de la figure 4.
La figure 6 est une vue schématique en coupe transversale d'un dispositif de moulage à axe horizontal suivant l'invention équipé d'un châssis de transfert à soufflet gonflable.
Les figures 7 et 8 sont des détails de la figure 6.
La figure 9 est une vue schématique en coupe transversale d'un dispositif de moulage à axe vertical suivant l'invention
La figure 10 est une vue schématique en coupe transversale d'un dispositif de moulage à axe horizontal suivant l'invention équipé d'un couloir de transfert également suivant l'invention.
La figure 11 est un détail de la figure 10.

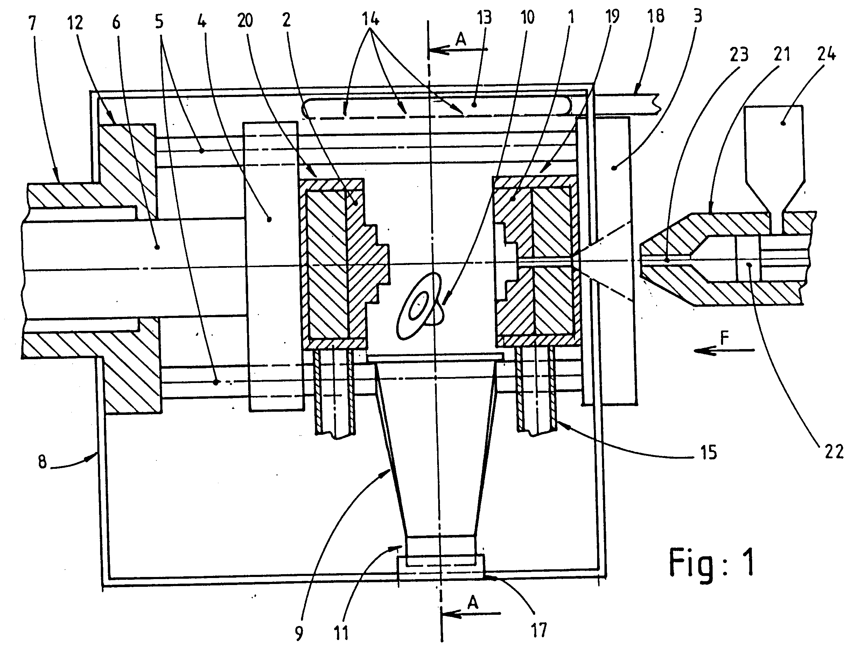

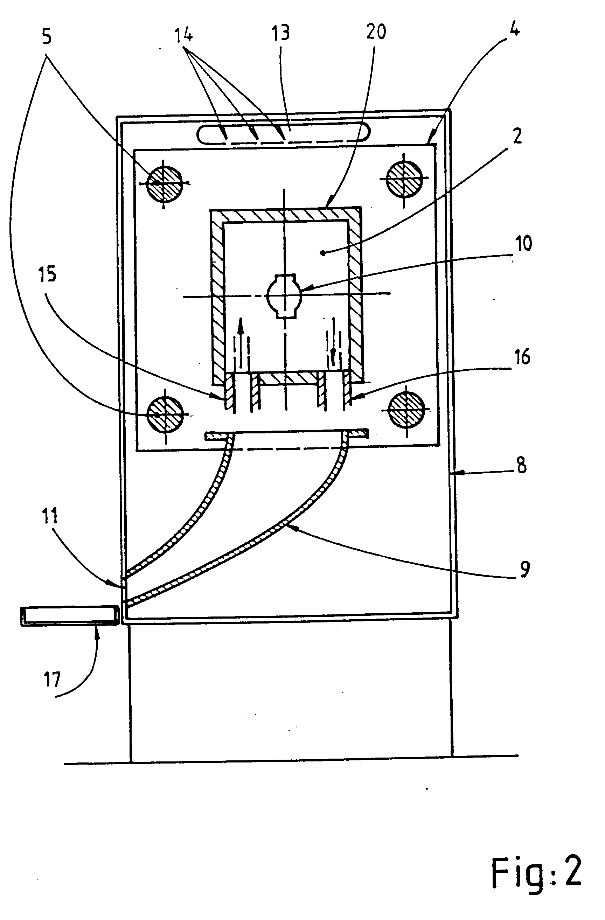

Exemple 1 - Les figures 1 et 2 représentent un premier mode de réalisation du procédé suivant l'invention et du dispositif correspondant.

On voit figure 1 un dispositif de moulage par injection d'une barbotine dans un moule refroidi à température inférieure à 0°C, l'ébauche crue obtenue devant être ensuite séchée sous vide puis frittée à température convenable.

La barbotine mise en oeuvre comporte une phase solide divisée comprenant au moins une poudre non organique en suspension dans une phase liquide. Cette phase liquide peut être aqueuse ou organique et comporter différents additifs tels que des agents cryoprotecteurs, des dispersants, des agents permettant d'ajuster la viscosité de la barbotine ou son homogénéité, des agents de renforcement de la résistance mécanique des ébauches crues etc...

Des exemples non limitatifs de composition de barbotines sont donnés dans les brevets WO 88/07902 et WO 88/07903 cités plus haut. Ces exemples concernent des barbotines à base de poudres métalliques ou de céramiques ou de leurs mélanges en suspension dans des solutions aqueuses ou non aqueuses contenant généralement des additions diverses.

Conformément au procédé suivant l'invention, on se propose de maintenir autour des composants du moule dans lequel sont réalisées les ébauches crues, par solidification de la barbotine une atmosphère gazeuse dont le point de rosée n'est pas supérieur et est préférentiellement inférieur à la température des composants de ce moule.

Pour atteindre ce but, seuls les deux parties 1, 2 du moule, la première portée par un plateau fixe 3 et la deuxième par un plateau mobile 4 ainsi que les tirants 5 et le piston 6 du vérin 7 sont logés à l'intérieur d'une enceinte 8 dans laquelle on se propose de réaliser l'atmosphère gazeuse ayant la caractéristique de bas point de rosée qui vient d'être précisée.

Une goulotte d'évacuation 9, logée également à l'intérieur de l'enceinte au-dessous du moule permet la réception de chaque ébauche crue moulée 10 après ouverture du moule et éjection de cette ébauche crue 10. L'ébauche est transférée par gravité à l'intérieur de la goulotte en direction de l'orifice de sortie 11 dont la section est déterminée pour permettre le passage de cette ébauche qui est ensuite reçue dans un récipient 17.

Comme le montrent schématiquement les figures 1 et 2, la barbotine est injectée par un dispositif 21 qui se trouve à l'extérieur de l'enceinte 8. Les parois de celle-ci sont avantageusement réalisées en une matière plastique transparente étanche et ayant une tenue mécanique suffisante telle que, par exemple, un polymetacrylate de methyle ou un polycarbonate.

On voit que l'un des côtés de l'enceinte 8 est solidarisé avec le plateau fixe 3, le côté opposé étant solidarisé avec le bord annulaire 12 du vérin 7 dont le piston 6 entraîne la partie mobile 2 du moule.

Suivant l'invention, un distributeur d'un fluide gazeux 13 est placé au voisinage du moule 1, 2, c'est-à-dire, dans le cas présent, au-dessus du moule contre la paroi supérieure de l'enceinte. Ce distributeur est un tube disposé en quadrilatère dont on voit seulement un des quatre côtés. Il est percé de trous tels que 14 répartis sur sa longueur et orientés de façon à diriger le flux gazeux vers le moule. L'alimentation du distributeur 13 en gaz sec est faite de l'extérieur par le tube 18. L'orifice de sortie 11 du gaz contenu dans l'enceinte se trouve au delà du moule 1, 2, par rapport au sens général du courant gazeux créé par le distributeur et reste ouvert en permanence.

La figure 2 qui est une vue suivant le plan de coupe A-A de la figure 1 montre les orifices d'entrée 15 et de sortie 16 du fluide caloporteur qui abaisse la température de la partie 2 du moule au niveau voulu. La partie 1 du moule est refroidie de la même façon. Les tuyaux souples 15, 16 sont isolés thermiquement et sont reliés de façon non représentée à un générateur frigorigène non représenté, disposé à l'extérieur de l'enceinte.On abaisse ainsi la température des parties 1, 2 du moule jusqu'à environ - 40°C, -50°C, -60°C à -80°C. Pour certaines applications, des températures situées dans l'intervalle de 0 à -60°C peuvent être suffisantes mais, par contre, l'utilisation de températures situées dans l'intervalle de -60 à -100°C, présente des avantages importants, en particulier pour les barbotines utilisant des dispersants aqueux, du point de vue de la qualité des ébauches crues et donc aussi, des pièces frittées qui en résultent, ainsi que sur le plan de la productivité de la machine de moulage.

Comme le montre la figure 2, la goulotte 9 est située au-dessous du moule 1, 2 pour se trouver sur le parcours de l'ébauche crue 10 au moment de son éjection. Celle-ci est effectuée de façon connue et non représentée à partir de la partie mobile 2 du moule au moyen de tiges métalliques non représentées qui pénètrent par l'arrière de la partie 2 du moule et exercent une poussée sur l'ébauche crue après ouverture du moule. Après son éjection, l'ébauche crue 10 est guidée par la goulotte 9, traverse l'orifice 11 et tombe dans le récipient 17. Le débit de gaz sec, tel que de l'air, de l'azote ou autre, est choisi principalement en fonction de la section de l'orifice 11 qui, elle-même, est fonction des dimensions des ébauches crues qui doivent le traverser.

Dans le cas, par exemple, d'un orifice rectangulaire mesurant 3 cm de haut et 5 cm de largeur, l'expérience montre qu'un débit d'environ 40 m³/h d'air sec ayant un point de rosée inférieur à -60°C, permet d'éviter toute condensation au niveau d'un moule 1, 2 refroidi vers -50°C pendant la production en série d'ébauches crues à une cadence d'environ 2 injections par minute. On diminue l'absorption de chaleur par les parties 1, 2 du moule en les revêtant, par exemple, latéralement d'une couche isolante, par exemple, de plastique expansé 19, 20.

L'injecteur 21 est mobile ; il vient en appui sur le plateau fixe 3 suivant la flèche F pendant l'injection, le piston 22 actionné par des moyens connus non représentés injectant la barbotine. Après injection, l'injecteur recule à nouveau pour éviter le refroidissement de son extrémité au-dessous de 0°C. Ces déplacements cycliques de l'injecteur sont commandés de façon connue comme par exemple par vérin et non représentée.

La disposition adoptée permet un libre accès à la trémie d'alimentation 24 et à l'unité d'injection 21 en cours d'exploitation, ce qui est souvent nécessaire notamment pour les nettoyages.

On réalise ainsi, en série, des ébauches crues pour boîtiers de montre en acier inoxydable à partir d'une barbotine contenant une poudre d'acier inoxydable de grosseur de grain inférieure à 20 micromètres, mise en suspension dans une base aqueuse ou non aqueuse. Après séchage par sublimation sous vide, puis frittage, on obtient des pièces dont la densité atteint 99,5 % de la valeur théorique du métal forgé.

Le procédé et le dispositif conviennent aussi pour la réalisation d'ébauches crues à base de poudres métalliques, de céramiques, ou encore d'un mélange de poudre de céramique et de poudre métallique.

Le procédé et le dispositif suivant l'invention conviennent pour la réalisation d'ébauches crues de forme très complexe qui pourraient être endommagées au cours de leur chute dans une goulotte ou pour lesquelles il serait nécessaire d'avoir des orifices de sortie de plus forte section ce qui nécessiterait un accroissement du débit de gaz sec trop important. La circulation du gaz à l'intérieur de l'enceinte provoque , en effet, un échauffement du moule malgré le calorifugeage des parois.

Les exemples suivants concernent des dispositifs relatifs à un autre mode de réalisation permettant de résoudre ces problèmes.

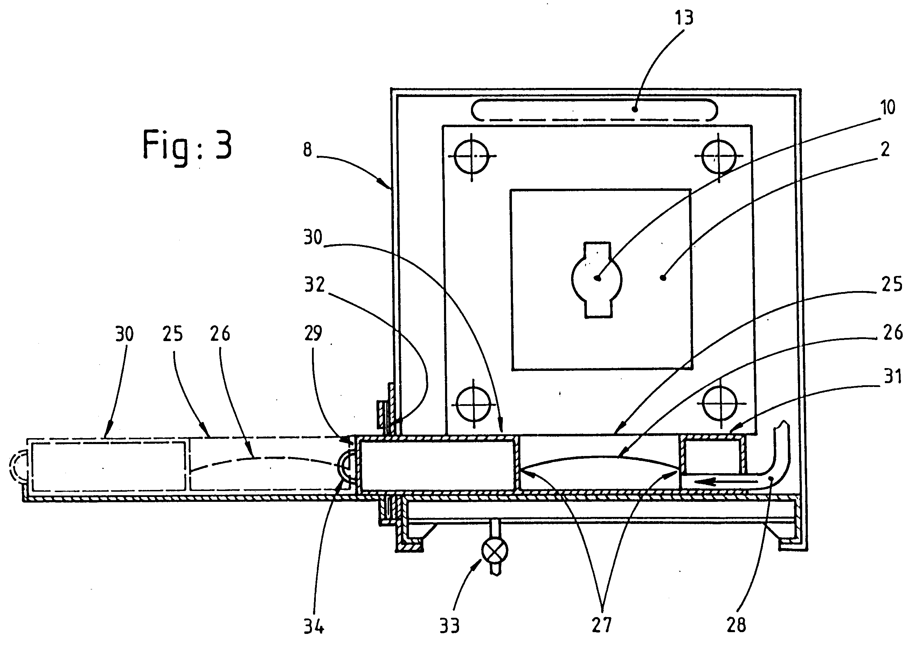

Exemple 2 - La figure 3 concerne un mode de réalisation du procédé et du dispositif suivant l'invention dans lequel les ébauches crues ne sont plus extraites par passage dans une goulotte ouverte de façon permanente.

Pour cela, comme le montre la figure 3 qui est, comme la figure 2, une vue dans un plan perpendiculaire à l'axe de fermeture d'un moule dont seul est visible le composant mobile 2 en position d'ouverture, on utilise un plateau-récepteur 25. Ce plateau-récepteur comporte une surface de réception 26 constituée par une matière souple déformable telle qu'une toile tissée ou non tissée en une fibre naturelle, synthétique, ou mélangée, ou encore en une matière plastique ou un élastomère comportant des perforations fines, fixée à un cadre 27 par ses bords. Celle toile est perméable de façon à permettre le passage d'un courant gazeux à point de rosée inférieur à la température du moule qui est introduit à l'intérieur du récepteur au-dessous d'elle de façon à diffuser à travers elle, de bas en haut. Ce courant gazeux a, avantageusement, la même composition que celui qui alimente le distributeur 13 mais avec un débit, de préférence, beaucoup plus faible.

Après éjection de l'ébauche crue 10 et réception de celle-ci sur la surface de réception déformable 26 du plateau 25, on transfère l'ébauche à l'extérieur au moyen du tiroir de transfert 29 de section rectangulaire. Ce tiroir est apte à coulisser à travers l'enceinte 8 grâce à un orifice pourvu d'un joint 32 et grâce à des glissières adaptées non représentées. Le joint 32 peut être un joint à lèvres ou un joint brosse semi-étanche, tel que celui représenté, analogue à ceux qui équipent les portes tournantes ou encore tout autre type de joint adapté à ce type de liaison coulissante.

Le plateau-récepteur 25 est placé entre deux compartiments parallélipipédiques fermés et étanches, de même section que le plateau-récepteur 25 qui jouent le rôle d'obturateur mobile.

Comme le montre la partie gauche de la figure 3 représentée en tirets, il est possible, en tirant la poignée 34, de sortir complètement jusqu'à une position de butée, le plateau-récepteur de l'enceinte, le deuxième compartiment 31 jouant alors le rôle d'obturateur au niveau de l'orifice équipé du joint 32. On peut alors enlever l'ébauche crue puis ramener le tiroir à sa position initiale.

Le tuyau 28 qui introduit le gaz sec dans le plateau-récepteur 25 au-dessous de la surface de réception 26, traverse le compartiment 31. Ce tuyau souple a la longueur voulue, non représentée, pour accompagner le tiroir dans son déplacement alternatif tout en demeurant relié à la source de gaz sec située à l'extérieur de l'enceinte et non représentée.

On peut limiter la quantité d'humidité ramenée dans l'enceinte par le tiroir en accroissant le débit de gaz sec à travers la toile pendant le déplacement alternatif du tiroir 29.

De préférence, on favorise le maintien d'un courant régulier de gaz sec dans l'enceinte grâce au débit du distributeur 13 et grâce à l'établissement d'un écoulement permanent du gaz contenu dans l'enceinte vers l'extérieur par un orifice réalisé dans la paroi de cette enceinte au-delà de la zone du moule 2 par rapport au distributeur. Le débit à travers cet orifice est contrôlé par une vanne 33. En réglant avec précision les débits de gaz sec à travers le distributeur 13 et à travers la surface de réception 26 ainsi que le débit de sortie de gaz de l'enceinte à travers la vanne 33, on peut maintenir un niveau déterminé de surpression dans l'enceinte. Cette surpression permet en particulier de limiter la pénétration d'humidité à chaque aller-retour du plateau-récepteur 25. On peut commander les mouvements du tiroir 29 par des moyens mécaniques bien connus tels qu'un vérin à double effet, une courroie crantée sans fin, entrainée par un moteur électrique ou tout autre dispositif . Des moyens électroniques bien connus peuvent permettre de contrôler les débits de gaz à travers le distributeur 13, à travers la surface de réception 26 et à travers la vanne 33 et de les ajuster afin de maintenir la surpression dans l'enceinte à un niveau déterminé.

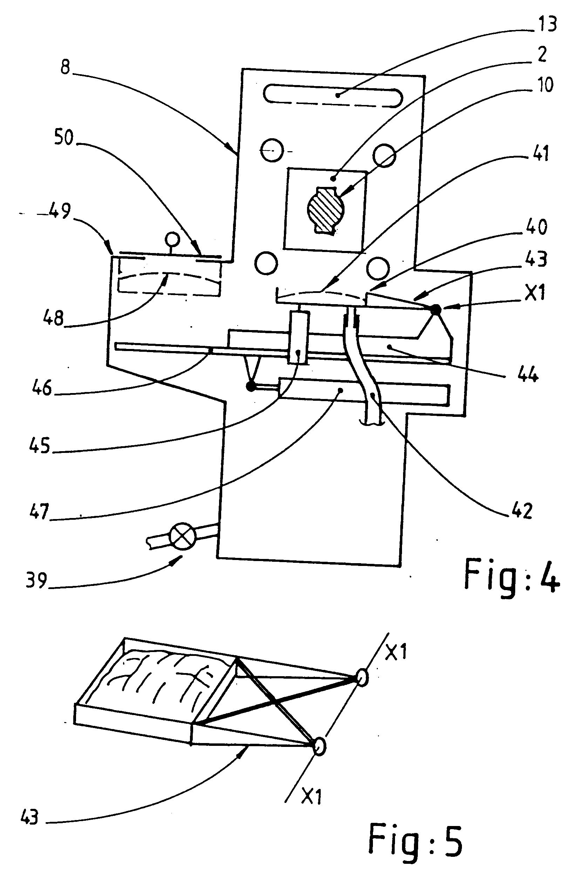

Exemple 3 - La figure 4 décrit un mode différent de réception et de transfert de l'ébauche crue 10 éjectée à partir de la partie mobile d'un moule schématisé par le repère 2, la disposition générale de l'unité de moulage étant analogue à celle de la figure 3. Le plateau-récepteur 40 comporte une surface de réception perméable 41 traversée de bas en haut par un courant de gaz sec provenant d'un tuyau souple 42 alimenté de l'extérieur par un moyen d'alimentation réglable non représenté qui, de préférence, alimente également le distributeur 13 placé au voisinage du moule 2.

Le plateau-récepteur 40 est articulé au moyen de bras tels que 43 (voir figure 5), autour d'un axe X1-X1, perpendiculaire au plan de la figure 4, sur des portées reliées au châssis 44. Un vérin à air comprimé 45, relié au châssis 44 supporte le plateau-récepteur 40 et contribue à amortir élastiquement le choc provoqué par l'impact de l'ébauche 10 éjectée par le moule 2 sur la surface de réception 41. Le châssis 44 monté sur des glissières horizontales 46 se déplace sur celles-ci sous l'action d'un vérin à air comprimé 47 jusqu'à une position de transfert pour laquelle le plateau-récepteur se trouve directement au-dessous d'un orifice de sortie ménagé dans la paroi 8 de l'enceinte. Des moyens de commande non représentés permettent de soulever le plateau-récepteur 40 au moyen du vérin 45 pour le mettre en appui contre la paroi 49 de l'enceinte 8 dans la zone entourant l'orifice 48. Cet appui est étanche grâce à un joint d'étanchéité non représenté dont est muni le bord du plateau-récepteur 40. On ouvre alors le couvercle 50 et on transfère l'ébauche crue à l'extérieur de l'enceinte. On referme ensuite le couvercle 50, de façon étanche, grâce à des joints d'étanchéité non représentés et on ramène le plateau-récepteur 40 à sa position initiale. Afin d'éviter la pénétration d'humidité dans l'enceinte, on accroît le débit d'air sec, provenant du tuyau 42, à travers la surface de réception 41.

Comme dans le cas de l'exemple précédent, on munit, de préférence, la paroi de l'enceinte d'un orifice à débit réglable par une vanne 39 afin de contrôler un écoulement régulier du flux gazeux introduit par le distributeur 13 et de maintenir dans des limites déterminées la surpression qui règne à l'intérieur de l'enceinte 8. On remarque que la surface de réception 41 du plateau 40 peut être remplacée par tout moyen amortisseur convenable permettant d'amortir l'impact de l'ébauche sur le plateau.

Exemple 4 - Cet exemple, comme celui des figures 3 à 5, concerne le transfert d'une ébauche crue éjectée à partir de la partie mobile d'un moule à axe de fermeture horizontale. La disposition générale de l'unité de moulage est analogue à celle de la figure 3.

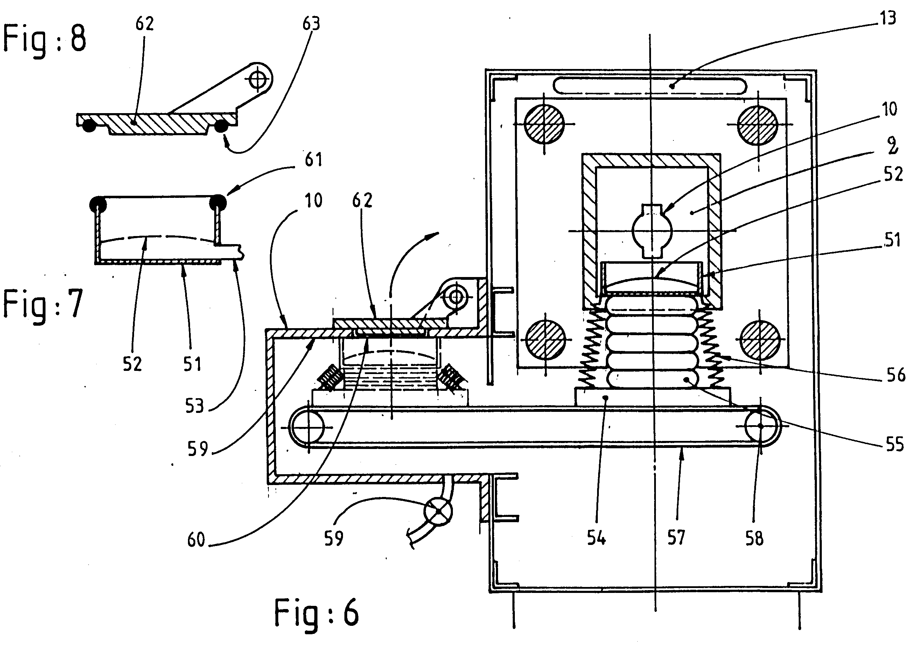

Selon la présente figure 6 et aussi la figure 7 de détail, on utilise un plateau-récepteur 51 qui comporte un moyen amortisseur d'impact pour la réception des ébauches crues constitué comme ceux des figures 3 et 4 d'une surface de réception perméable 52. Une arrivée d'air sec en 53 par un tuyau souple non représenté et dont la liaison avec l'extérieur de l'enceinte n'est pas non plus représentée, permet de réaliser un flux de gaz sec de bas en haut à travers la surface de réception perméable 52. Le plateau est relié à un châssis 54 par un soufflet 55 en élastomère apte à s'expanser verticalement afin de réduire la hauteur de chute de l'ébauche crue 10 au moment de son éjection.

L'espace étanche intérieur au soufflet 55 est relié par un tuyau souple non représenté lequel est relié à une source d'un gaz sous pression extérieur à l'enceinte ou, grâce à une vanne à 3 voies non représentée, est mis en communication avec l'air extérieur à l'enceinte. Les ressorts de rappel 56 assurent la descente du plateau-récepteur dès que la pression intérieure du soufflet est ramenée à la pression atmosphérique. Une courroie sans fin 57, entraînée par un moteur électrique non représenté qui actionne le galet 58 permet de transférer le plateau-récepteur 51 jusqu'à l'emplacement situé au-dessous de l'orifice de sortie 60.

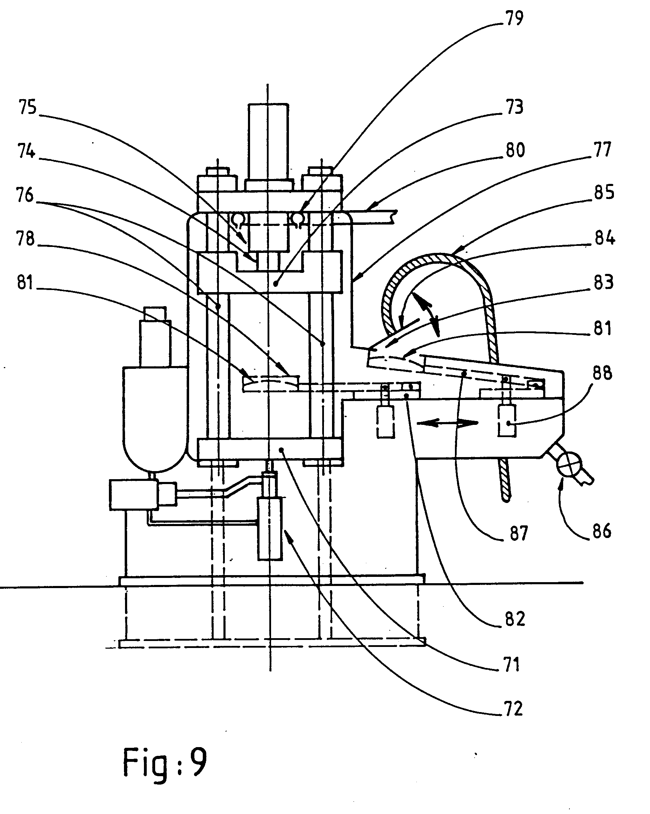

En mettant à nouveau en pression le soufflet 55, on met en appui étanche le bord du plateau-récepteur 51 qui est pourvu d'un joint d'étanchéité 61, contre la paroi 59 de l'enceinte dans la zone qui entoure l'orifice 60. On peut alors ouvrir le couvercle 62 dont le joint 63 (voir figure 8) assure l'étanchéité en position de fermeture. On transfère alors l'ébauche crue à l'extérieur et on referme le couvercle. Il est possible, tant que le couvercle 62 est ouvert, d'accroître le débit de gaz sec dans le plateau-récepteur 51 par l'orifice 53, pour éviter la pénétration d'humidité dans la partie supérieure de ce plateau. Après fermeture du couvercle 62 et réduction de la pression dans le soufflet 55, on peut ramener le châssis à sa position initiale en attendant le prochain cycle opératoire. Comme dans le cas des exemples des figures 3 et 4, il est nécessaire d'établir à l'intérieur de l'enceinte un flux régulier d'un gaz sec, de point de rosée inférieur à la température du moule dans la zone de celui-ci. L'entrée de gaz sec a lieu à travers le distributeur 13 et la sortie régulière de gaz de l'enceinte a lieu au delà de la zone du moule par rapport au distributeur. Cette sortie est contrôlée par la vanne 59.

Exemple 5 - L'exemple ci-après concerne une machine de moulage à axe de fermeture vertical, l'injection de barbotine étant effectuée de bas en haut suivant l'axe de fermeture.

Comme le montre la figure 9, purement schématique, les deux parties du moule qui ne sont pas représentées de façon précise, sont solidarisées l'une avec un plateau fixe 71 horizontal à travers lequel est injectée la barbotine par l'injecteur 72 et l'autre partie avec le plateau mobile 73 actionné par le piston 74 d'un vérin 75. Des tirants verticaux 76 assurent la liaison entre le plateau fixe 71 et le corps du vérin 75. Une enceinte 77 contient le plateau fixe 71 et le plateau mobile 73 ainsi que les tirants 76 et le piston 74. Cette enceinte 77 se limite, à la partie inférieure, au niveau du plateau fixe 71 et contient également le mécanisme de transfert du plateau-récepteur 78. Un distributeur 79 d'un gaz sec, ou azote ou autre à point de rosée inférieur à la température du moule, est logé à l'extrémité supérieure de l'enceinte sous forme d'un tube annulaire percé de trous orientés vers le bas sur son pourtour et entourant le corps du vérin 75. Le distributeur est alimenté de façon connue par un tuyau 80 relié à une source de gaz sec non représentée. Le plateau-récepteur 78 équipé, comme moyen d'amortissement de l'impact des ébauches crues, d'une surface souple de réception perméable 81, est muni d'une arrivée de gaz sec par un tuyau flexible non représenté. Le plateau est supporté par un chariot 82, apte à se déplacer sur des glissières sous l'action d'un moyen adapté tel qu'un vérin ou bien une courroie sans fin entraînée par un moteur électrique ou tout autre moyen convenable. Le chariot 82 permet, après ouverture du moule, d'introduire le plateau-récepteur 78 entre les deux plateaux porte-moule et de recevoir, après éjection, à partir de la partie mobile du moule, l'ébauche crue. Le chariot déplace ensuite le plateau-récepteur vers la droite jusqu'à la position de transfert d'ébauche à travers l'orifice de sortie 83 qui comporte un couvercle 84. Un bras oscillant 87 relié au chariot 82 et au plateau-récepteur 78 permet, sous l'action du vérin 88 d'appliquer le bord du plateau-récepteur contre la paroi de l'enceinte dans la zone entourant l'orifice. Des moyens d'étanchéité tels que ceux représentés aux figures 7 et 8 permettent une liaison étanche entre les bords du plateau-récepteur 78 et le bord de l'enceinte entourant l'orifice 83. Une alimentation en gaz sec relié au couvercle 84 par un tuyau 85 permet d'effectuer un balayage de gaz sec au-dessus du plateau-récepteur 78 pendant la fermeture du couvercle 84, après enlèvement de l'ébauche crue, afin de réduire la pénétration d'humidité. Un orifice ménagé dans la paroi de l'enceinte au voisinage du chariot 82 et pourvu d'une vanne 86 permet d'établir à l'intérieur de l'enceinte un courant régulier de gaz sec à partir du distributeur 79 afin de maintenir le point de rosée, au voisinage du moule, à une température inférieure à celle de celui-ci. La régulation de la surpression à l'intérieur de l'enceinte et celle du débit de gaz sec peuvent être automatisées. De même, chaque cycle opératoire peut être automatisé.

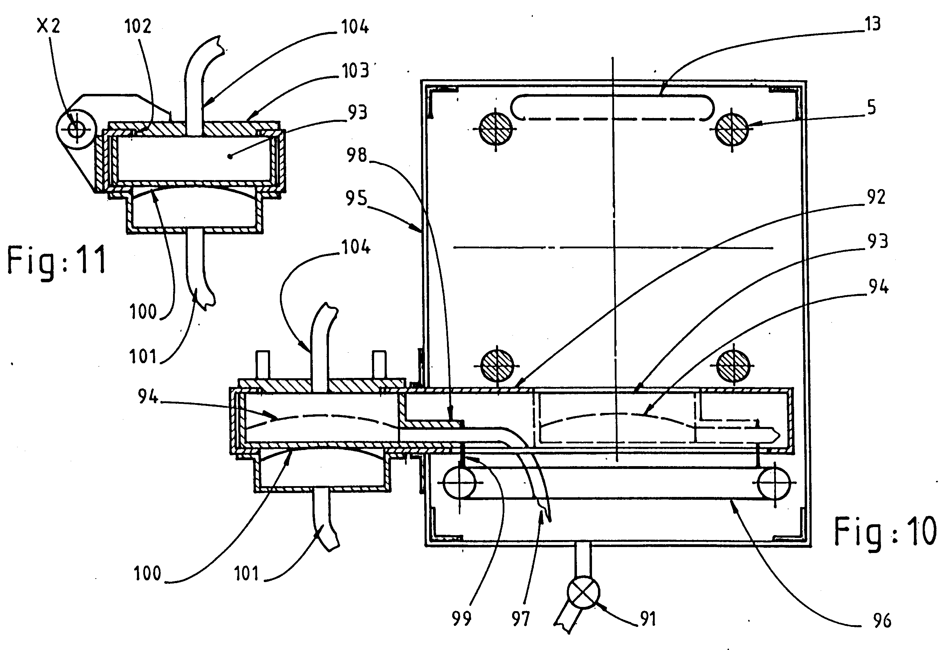

Exemple 6 - Cet exemple qui correspond aux figures 10 et 11, concerne un mode particulier de réalisation du dispositif suivant l'invention dans lequel on a cherché à réduire au minimum les possibilités de pénétration d'humidité dans l'enceinte ainsi que la consommation de gaz sec. Il est appliqué à une machine de moulage à axe horizontal analogue à celle représentée figure 3. Comme dans le cas de la figure 3, la figure 10 est une vue du plateau mobile d'une presse à axe horizontal, plateau qui coulisse sur des tirants tels que 5. Un distributeur 13 introduit un flux déterminé d'air sec en direction du moule et un orifice muni d'une vanne 91, permet de régulariser le courant gazeux qui parcourt la zone du moule et de maintenir l'enceinte 8 en légère surpression. Un couloir de guidage 92 de section rectangulaire est conçu pour permettre le glissement à l'intérieur sans frottement excessif d'un plateau-récepteur 93 muni d'un moyen amortisseur d'impact constitué par la surface de réception 94 en une matière souple déformable perméable fixée aux parois latérales du plateau-récepteur. Le couloir 92 est fixe, il traverse la paroi 95 de l'enceinte par un passage étanche. L'extrémité de ce couloir extérieur à l'enceinte est fermée de façon étanche également. A l'intérieur de l'enceinte, le couloir comporte des éléments de guidage latéraux mais ne recouvre pas le plateau-récepteur 93, en position de réception, lequel est ouvert à la partie supérieure pour recevoir chaque ébauche crue éjectée de son moule. A la partie inférieure, le couloir comporte au moins une ouverture longitudinale à l'intérieur de laquelle est logée une courroie sans fin 96 entraînée par moteur électrique non représenté. De plus, un tuyau souple 97 alimente en un gaz sec, la partie inférieure du plateau-récepteur par un manchon de raccordement 98. La courroie 96 entraîne, par le taquet 99 placé à l'extrémité du manchon 98, le plateau-récepteur jusqu'à l'extrémité du couloir 92, extérieure à l'enceinte. Une membrane élastique 100 située dans un logement ouvert seulement sur le fond du couloir 92 est reliée par un tuyau 101 à une source séparée de gaz sous pression non représentée. En gonflant cette membrane, on plaque de façon étanche les bords du plateau-récepteur 93 munis d'un joint en élastomère, tel que le joint représenté figure 7, contre le bord supérieur du couloir dans la zone entourant l'orifice 102 fermé par l'obturateur 103. Dès que le plateau-récepteur est ainsi plaqué contre l'orifice 102, on ouvre l'obturateur 103 articulé autour d'un axe X2 et on extrait l'ébauche crue reçue initialement à l'intérieur de l'enceinte. On peut ensuite refermer le couvercle en effectuant un balayage par injection d'un gaz sec au moyen du tuyau souple 104 relié à une source de gaz sec non représentée, qui peut être la même que celle alimentant le distributeur 13. Il est possible également de créer une dépression dans le compartiment supérieur du plateau-récepteur 93 en reliant le tuyau 104 à une pompe. On peut alors combiner une introduction de gaz sec au-dessous de la surface de réception 94 avec la dépression créée au-dessus afin d'éliminer toute trace d'humidité. On peut alors dégonfler la membrane 100 et ramener le plateau-récepteur 93 en position de réception sous l'action de la courroie sans fin.

Afin d'améliorer l'étanchéité de l'obturateur 103, on peut prévoir d'améliorer sa fermeture au moyen d'un vérin de force déterminée permettant de plaquer un joint torique avec la force voulue. Le même vérin à double effet sera utilisé pour ouvrir et fermer cet obturateur.

Comme dans le cas des exemples précédents, on peut utiliser des moyens automatiques de contrôle de la pression à l'intérieur de l'enceinte et de réglage des débits du distributeur 13 du tuyau 97 qui alimente le plateau-récepteur 93 et du débit de l'orifice de l'enceinte à travers la vanne 91 qui permettent de maintenir un débit déterminé de gaz sec autour de la zone du moule et de maintenir une surpression déterminée à l'intérieur de l'enceinte. De même, il est possible d'automatiser le cycle opératoire de réception de l'ébauche crue, de transfert de celle-ci au point de sortie, ainsi que son enlèvement du plateau-récepteur et son passage à travers l'orifice 102 contrôlé par l'obturateur 103.

## Revendications

1. Procédé de production d'ébauches crues obtenues par injection et solidification dans un moule porté à une température inférieure à 0°C d'une barbotine contenant au moins une poudre métallique ou non métallique en suspension dans un liquide caractérisé en ce qu'on loge dans une enceinte les parties composant le moule ainsi que les parties mobiles d'au moins un moyen assurant l'ouverture et la fermeture du moule et ainsi que les moyens d'éjection, de réception, et de transfert des ébauches crues à l'extérieur de l'enceinte et en ce qu'on réalise à l'intérieur de l'enceinte, au voisinage des parois du moule, un courant gazeux sec, continu ou non continu, dont le point de rosée n'est pas supérieur à la température du moule, au moins un orifice de sortie étant réalisé dans la paroi de l'enceinte, cet orifice étant ouvert de façon continue ou discontinue.

2. Procédé suivant la revendication 1 caractérisé en ce que le courant gazeux sec est réalisé par émission à l'intérieur de l'enceinte, au voisinage du moule d'un flux gazeux ayant un point de rosée inférieur à la température du moule, orienté en direction des parois de celui-ci.

3. Procédé suivant la revendication 1 ou 2 caractérisé en ce que le gaz utilisé pour constituer le flux gazeux est de l'air ou de l'azote.

4. Procédé suivant l'une des revendications 1 à 3 caractérisé en ce que la température du moule est comprise entre 0 et -100°C.

5. Procédé suivant l'une des revendications 1 à 4 caractérisé en ce qu'on effectue l'émission du flux gazeux à point de rosée inférieur à la température du moule par un moyen de distribution situé au voisinage du moule, qu'on dispose de façon à répartir ce flux gazeux et à l'orienter en direction des parois du moule.

6. Procédé suivant l'une des revendications 1 à 5 caractérisé en ce qu'on maintient ouvert en permanence l'orifice de sortie qui assure un débit moyen de gaz suffisant pour régulariser l'écoulement du courant gazeux sec au voisinage du moule et en ce qu'on utilise cet orifice pour le transfert à l'extérieur de l'enceinte des ébauches crues.

7. Procédé suivant la revendication 6 caractérisé en ce qu'on place l'orifice, ouvert en permanence, pour régulariser l'écoulement du courant gazeux et assurer le transfert vers l'extérieur de l'enceinte des ébauches crues, à la partie inférieure de cette enceinte et en ce qu'on le relie à une goulotte logée à l'intérieur de l'enceinte et disposée de façon à recevoir à sa partie supérieure l'ébauche crue éjectée du moule et à la guider dans son déplacement par gravité jusqu'à l'orifice qu'elle franchit en fin de parcours.

8. Procédé suivant l'une des revendications 1 à 5 caractérisé en ce qu'on reçoit l'ébauche crue, éjectée du moule, sur un plateau-récepteur au moyen duquel on effectue ensuite son transfert vers l'extérieur par passage à travers un orifice de sortie qu'on ouvre de façon discontinue pour permettre son franchissement par l'ébauche crue.

9. Procédé suivant la revendication 8 caractérisé en ce qu'on munit le plateau-récepteur d'un moyen d'amortissement permettant de diminuer l'impact de l'ébauche crue sur le plateau-récepteur.

10. Procédé suivant la revendication 8 ou 9 caractérisé en ce qu'on utilise un moyen élévateur pour réduire la distance verticale entre le plateau-récepteur et la zone d'éjection de l'ébauche crue afin de réduire l'impact de celle-ci sur le plateau-récepteur.

11. Procédé suivant la revendication 8 ou 9 caractérisé en ce qu'on effectue le transfert de l'ébauche crue à l'extérieur de l'enceinte en faisant sortir le plateau-récepteur de cette enceinte le temps nécessaire pour enlever cette ébauche crue et en ramenant ensuite ce plateau-récepteur à son emplacement initial, un obturateur coulissant permettant de réduire les fuites de gaz vers l'extérieur lorsque le plateau-récepteur est, soit à son emplacement intérieur de réception de l'ébauche crue, soit à son emplacement extérieur de prélèvement de l'ébauche.

12. Procédé suivant la revendication 8 ou 9 caractérisé en ce qu'on effectue le transfert de l'ébauche crue jusqu'à l'extérieur de l'enceinte par transfert du plateau-récepteur jusqu'à un emplacement situé au-dessous d'un orifice de sortie de l'enceinte pourvu d'un couvercle, puis en ce qu'on applique le bord supérieur du plateau contre la zone entourant l'orifice afin de pouvoir enlever l'ébauche crue après enlèvement du couvercle et en ce qu'on ramène ensuite le plateau-récepteur à sa position initiale.

13. Procédé suivant la revendication 12 caractérisé en ce qu'on fait circuler de bas en haut un courant d'un gaz sec autour de l'ébauche crue contenue dans le plateau-récepteur, au moins pendant le temps où cette ébauche crue se trouve au contact de l'air extérieur avant sortie du plateau-récepteur.

14. Procédé suivant l'une des revendications 12 ou 13 caractérisé en ce que le couvercle de l'orifice permettant de sortir l'ébauche crue du plateau-récepteur est muni d'un tuyau d'arrivée d'un gaz sec permettant d'effectuer un balayage de la surface du plateau-récepteur après enlèvement de l'ébauche crue et avant retour à sa position initiale.

15. Procédé suivant revendication 12 ou 13 caractérisé en ce que le couvercle de l'orifice qui permet de sortir l'ébauche crue du plateau-récepteur comporte un tuyau d'aspiration qui permet, après fermeture du couvercle, d'aspirer le gaz présent dans le plateau-récepteur.

16. Procédé suivant l'une des revendications 8 à 15 caractérisé en ce que l'enceinte comporte, en plus de l'orifice de sortie ouvert de façon discontinue pour le passage de l'ébauche crue, au moins un deuxième orifice de sortie contrôlé par un moyen de réglage du débit, qui permet de régulariser le courant gazeux dans la zone du moule et de maintenir une surpression dans l'enceinte entre des limites déterminées.

17. Procédé suivant la revendication 16 caractérisé en ce qu'on utilise des moyens automatiques de contrôle de la pression à l'intérieur de l'enceinte, ainsi que des moyens de contrôle du débit de gaz sec introduit dans la zone d'émission au voisinage du moule, ainsi que des moyens de contrôle du débit de gaz sec introduit dans le plateau de réception, d'autres moyens permettant de mesurer le débit de sortie de gaz de l'enceinte au niveau de l'orifice de sortie réglable, pour ajuster de façon automatique le débit de cet orifice de sortie afin de maintenir la pression à l'intérieur de l'enceinte dans des limites déterminées tout en assurant un courant régulier de gaz dans la zone du moule et en tenant compte des sorties de gaz se produisant au moment de l'enlèvement de l'ébauche du plateau-récepteur à chaque cycle opératoire.

18. Dispositif permettant le moulage d'ébauches crues par injection et solidification d'une barbotine dans un moule, cette barbotine comportant un mélange d'une phase solide comprenant au moins une poudre métallique ou céramique en suspension dans un liquide, le moule (1,2) étant refroidi à température inférieure à 0°C et comportant au moins une partie mobile (2) qu'un moyen comme par exemple un vérin (7) maintient en appui contre la partie fixe (1) pendant l'injection et la solidification, caractérisé en ce qu'il comporte une enceinte (8) qui entoure les parties fixes et mobiles du moule ainsi que les parties mobiles du moyen de fermeture-ouverture, ainsi que les moyens d'éjection, de réception et de transfert des ébauches crues en direction de l'extérieur de l'enceinte et en ce qu'il comporte au moins un moyen de distribution (13) de fluide gazeux à point de rosée inférieur à la température d'utilisation du moule disposé à l'intérieur de l'enceinte, au moins un orifice (11) réalisé à travers la paroi de l'enceinte et ouvert de façon continue ou discontinue permettant l'évacuation vers l'extérieur des ébauches crues, un volume gazeux du fluide introduit par le moyen de distribution étant susceptible de s'échapper par cet orifice, une atmosphère gazeuse à point de rosée inférieur à la température du moule étant réalisée au voisinage des parois du moule.

19. Dispositif suivant la revendication 18 caractérisé en ce que le refroidissement des parties fixe et mobile (1, 2) du moule est effectué par un fluide caloporteur, refroidi par un groupe frigorigène situé à l'extérieur de l'enceinte (8), circulant à l'intérieur des deux parties du moule.

20. Dispositif suivant la revendication 18 ou 19 caractérisé en ce que l'orifice (11) réalisé dans la paroi (8) de l'enceinte est relié à une goulotte (9) qui reçoit les ébauches (10) crues éjectées du moule et permet leur transfert par gravité jusqu'à l'extérieur de l'enceinte.

21. Dispositif suivant la revendication 18 ou 19 caractérisé en ce que l'ébauche crue (10), au moment de son éjection, est reçue par un plateau-récepteur (25, 40, 51, 78, 93).

22. Dispositif suivant la revendication 21 caractérisé en ce que le plateau-récepteur est muni d'un moyen amortisseur d'impact (26, 41, 52, 81, 94).

23. Dispositif suivant la revendication 22 caractérisé en ce que le moyen amortisseur d'impact (26, 41, 52, 81, 94) est une surface de réception déformable et perméable apte à être traversée de bas en haut par un courant gazeux qui la gonfle élastiquement.

24. Dispositif suivant l'une des revendications 21 à 23 caractérisé en ce qu'un moyen élévateur (55) permet de soulever le plateau-récepteur pour le rapprocher du point d'éjection de l'ébauche crue (10).

25. Dispositif suivant l'une des revendications 21 à 23 caractérisé en ce que le plateau-récepteur (25) de l'ébauche crue (10) est monté dans un tiroir coulissant (30) traversant l'enceinte (8) par un orifice équipé d'un joint (32) de manière à permettre le transfert du plateau-récepteur chargé de l'ébauche crue (10) à l'extérieur de l'enceinte (8).

26. Dispositif suivant l'une des revendications 21 à 23 caractérisé en ce que le plateau-récepteur (40) comporte un moyen de déplacement permettant, après réception de l'ébauche crue (10) de venir mettre le plateau récepteur (10) en appui contre un orifice (48, 60, 83, 102) pourvu d'un obturateur mobile (50, 62, 84, 103).

27. Dispositif suivant l'une des revendications 21 à 23 caractérisé en ce qu'il comprend un couloir fixe (92) dans lequel le plateau-récepteur (93) est susceptible d'être déplacé par des moyens appropriés, le couloir fixe (92) comportant dans sa zone d'extrémité un moyen (100) de mise en appui étanche du plateau-récepteur (93) contre la zone entourant un orifice (102) muni d'un couvercle étanche (103).

28. Dispositif suivant l'une des revendications 21 à 27 caractérisé en ce qu'il comporte un orifice de sortie du gaz contenu dans l'enceinte en plus de l'orifice permettant l'évacuation vers l'extérieur des ébauches crues.

29. Dispositif suivant l'une des revendications 21 à 28 caractérisé en ce qu'il comporte des moyens automatiques d'exécution du cycle opératoire comprenant les opérations d'injection de la barbotine dans le moule (1, 2) de maintien par le piston (6) du moule en position de fermeture, puis l'ouverture du moule après solidification de l'ébauche crue (10), puis, l'éjection de celle-ci et sa réception par le plateau-récepteur (25, 40, 51, 78, 93), puis, le transfert de ce plateau jusqu'à la position d'enlèvement de l'ébauche (10) puis le retour de ce plateau-récepteur à sa position initiale.

30. Dispositif suivant la revendication 28 caractérisé en ce qu'il comporte des moyens automatiques de réglage du débit de l'orifice de sortie du gaz par l'orifice réglable réservé au passage de ce gaz (33, 39, 59, 86, 91) permettant de maintenir une surpression à l'intérieur de l'enceinte (8) dans des limites déterminées.

## Claims

1. Process for production of greens obtained by injection and solidification in a mould brought to a temperature lower than 0°C, of a slurry containing at least one metallic or non-metallic powder in suspension in a liquid, characterised in that in a vessel are housed the parts constituting the mould as well as the moveable parts of at least one means for ensuring the opening and the closure of the mould and also the means for ejecting, for receiving and for transferring the greens to the exterior of the vessel, and in that in the interior of the vessel, in the proximity of the walls of the mould, a continuous or discontinuous current of dry gas is produced, the dew point of which is not greater than the temperature of the mould, at least one outlet aperture being provided in the wall of the vessel, this aperture being open in a continuous or discontinuous manner.

2. Process according to claim 1, characterised in that the dry gas current is made by emission into the interior of the vessel, in the proximity of the mould, of a gas stream having a dew point lower than the temperature of the mould, oriented in the direction of the walls thereof.

3. Process according to claim 1 or 2, characterised in that the gas used to form the gas stream is air or nitrogen.

4. Process according to one of claims 1 to 3, characterised in that the temperature of the mould is between 0 and -100°C.

5. Process according to one of claims 1 to 4, characterised in that the emission of the gas stream with a dew point lower than the temperature of the mould is done by a distribution means situated in the proximity of the mould, which is arranged in such a manner as to distribute this gas stream and to orientate it in the direction of the walls of the mould.

6. Process according to one of claims 1 to 5, characterised in that the outlet aperture is kept permanently open, which allows an average gas discharge sufficient to regulate the flow of the dry gas current in the proximity of the mould and in that this aperture is used for transferring the greens to the outside of the vessel.

7. Process according to claim 6, characterised in that the aperture, permanently opened for regulating the flow of the gas current and for providing for the transfer of greens to the outside of the vessel is located at the lower part of said vessel and in that it is connected to a chute housed in the interior of the vessel and arranged in such a manner as to receive, on its upper part, the green ejected from the mould and to guide it in its displacement by gravity to the aperture, through which it passes at the end of its trajectory.

8. Process according to one of claims 1 to 5, characterised in that the green ejected from the mould is received by a receiving tray by means of which it is subsequently transferred to the outside by passing through an outlet aperture which is opened in a discontinuous manner to allow it to be passed through by the green.

9. Process according to claim 8, characterised in that the receiving tray is provided with a shock-absorbing means which allows the impact of the green on the receiving tray to be diminished.

10. Process according to claim 8 or 9, characterised in that a lifting means is used to reduce the vertical distance between the receiving tray and the area of ejecting the green in order to reduce the impact thereof on the receiving tray.

11. Process according to claim 8 or 9, characterised in that the transfer of the green to the outside of the vessel is done by moving the receiving tray outside the vessel for as long as is necessary for removal of said green and then by returning the receiving tray to its initial position, a sliding shutter allowing a reduction in gas leakages to the exterior while the receiving tray is either in its internal position for receiving the green or in its external position for removing the green.

12. Process according to claim 8 or 9, characterised in that the transfer of the green to the outside of the vessel is done by transfer of the receiving tray to a position located below an outlet aperture of the vessel provided with a cover, then by application of the top edge of the tray against the area surrounding the aperture in order to be able to remove the green after removal of the cover, and in that subsequently the receiving tray is returned to its initial position.

13. Process according to claim 12, characterised in that a dry gas current is circulated from the bottom to the top around the green contained in the receiving tray, at least during the time said green is in contact with the outside air before the green is removed from the receiving tray.

14. Process according to one of claims 12 or 13, characterised in that the aperture cover which allows the green to be removed from the receiving tray is provided with a pipe conducting a dry gas which allows the surface of the receiving tray to be swept after removal of the green and before returning to its initial position.

15. Process according to claim 12 or 13, characterised in that the cover of the aperture which allows the green to be removed from the receiving tray comprises a suction pipe which after closing of the cover allows the gas present in the receiving tray to be suctioned.

16. Process according to one of claims 8 to 15, characterised in that the vessel comprises, in addition to the outlet aperture open in a discontinuous manner for the passage of the green, at least a second outlet aperture controlled by a means for regulating the discharge rate, which enables the gas current around the area of the mould to be regulated and pressurisation in the vessel to be maintained within set limits.

17. Process according to claim 16, characterised in that automatic means for control of the pressure inside the vessel are used, as well as means for controlling the discharge rate of dry gas introduced in the emission area in the proximity of the mould, as well as means for controlling the discharge rate of dry gas introduced in the receiving tray, other means allowing measurement of the discharge rate of gas expelled from the vessel at the level of the controllable outlet aperture in order to automatically adjust the discharge rate of this outlet aperture in order to maintain the pressure inside the vessel within set limits while ensuring an even current of gas in the area of the mould, and taking into account the gas discharges being produced at the time of removal of the green from the receiving tray in each operating cycle.

18. Device allowing the moulding of greens by injection and solidification of a slurry in a mould, said slurry comprising a mixture of a solid phase comprising at least one metallic or ceramic powder in suspension in a liquid, the mould (1, 2) being cooled to a temperature lower than 0°C and comprising at least one moveable part (2) which means such as, for example, a jack (7), keep pressed against the fixed part (1) during injection and solidification, characterised in that it comprises a vessel (8) which surrounds the fixed and moveable parts of the mould as well as the moveable parts of the closure-opening means, and also the means for ejecting, receiving and transfer of the greens towards the outside of the vessel, and in that it comprises at least one distribution means (13) or gaseous fluid with a dew point lower than the operating temperature of the mould arranged inside the vessel, at least one aperture (11) provided through the wall of the vessel and open in a continuous or discontinuous manner, allowing removal to the outside of greens, a gaseous volume of the fluid introduced by the distribution means being able to escape through this aperture, a gaseous atmosphere with a dew point lower than the temperature of the mould being produced in the proximity of the walls of the mould.

19. Device according to claim 18, characterised in that the cooling of the fixed and moveable parts (1, 2) of the mould is done by a coolant fluid, cooled by a refrigerating unit located outside the vessel (8), circulating inside the two parts of the mould.

20. Device according to claim 18 or 19, characterised in that the aperture (11) provided in the wall (8) of the vessel is connected to a chute (9) which receives the greens (10) ejected from the mould and enables them to be transferred by gravity to the outside of the vessel.

21. Device according to claim 18 or 19, characterised in that when the green (10) is ejected it is received by a receiving tray (25, 40, 51, 78, 93).

22. Device according to claim 21, characterised in that the receiving tray is provided with shock-absorbing means (26, 41, 52, 81, 94).

23. Device according to claim 22, characterised in that the shock-absorbing means (26, 41, 52, 81, 94) is a deformable and permeable receiving surface able to be passed through from bottom to top by a gas current, which elastically inflates it.

24. Device according to one of claims 21 to 23, characterised in that a lifting means (55) allows the receiving tray to be raised in order to bring it towards the point where the green (10) is ejected.

25. Device according to one of claims 21 to 23, characterised in that the receiving tray (25) for the green (10) is mounted in a slide valve (30) passing through the vessel (8) by virtue of an aperture provided with a seal (32) such as to permit the transfer of the receiving tray loaded with the green (10) to the outside of the vessel (8).

26. Device according to one of claims 21 to 23, characterised in that the receiving tray (40) comprises a displacement means which allows the receiving tray (10), after receiving the green (10), to be made to bear against an aperture (48, 60, 83, 102) provided with a moveable shutter (50, 62, 84, 103).

27. Device according to one of claims 21 to 23, characterised in that it comprises a fixed channel (92) in which the receiving tray (93) can be displaced by appropriate means, the fixed channel (92) comprising at its end region a means (100) for placing the receiving tray (93) in a gas-tight manner against the area surrounding an aperture (102) provided with a gas-tight cover (103).

28. Device according to one of claims 21 to 27, characterised in that it comprises an outlet aperture for the gas contained in the vessel in addition to the aperture allowing removal of the greens to the outside.

29. Device according to one of claims 21 to 28, characterised in that it comprises means for automatically executing the operating cycle comprising the operations of injection of the slurry into the mould (1, 2), maintenance by the piston (6) of the mould in a closed position, then opening of the mould after solidification of the green (10), then ejection of said green and receiving thereof by a receiving tray (25, 40, 51, 78, 93), then transfer of this tray to the position in which the green (10) is removed, then return of said receiving tray to its initial position.

30. Device according to claim 28, characterised in that it comprises means for automatic control of the rate of discharge of gas at the outlet aperture by the controllable aperture reserved for the passage of said gas (33, 39, 59, 86, 91), allowing pressurisation inside the vessel (8) to be maintained inside the vessel (8) to be maintained within set limits.

## Patentansprüche

1. Verfahren zur Herstellung von rohen Vorformlingen, die durch Einspritzen und Verfestigen von Schlicker in einer Form erzielt werden, die bei einer Temperatur gehalten wird, die niedriger liegt als 0°C, wobei der Schlicker mindestens ein metallisches oder nichtmetallisches Pulver in Suspension in einer Flüssigkeit enthält, dadurch gekennzeichnet, daß man in einem Mantel die Teile, die die Form zusammensetzen, sowie die beweglichen Teile mit mindestens einer Einrichtung die das Öffnen und Schließen der Form sicherstellt, und die Einrichtungen zum Auswerfen, Aufnehmen und Überführen der rohen Vorformlinge zur Außenseite des Manteles anordnet, und daß man im Inneren des Mantels in der Nähe der Formwände einen kontinuierlichen oder nicht-kontinuierlichen, trockenen Gasstrom herstellt, dessen Taupunkt nicht über der Temperatur der Form liegt, wobei mindestens eine Austrittsöffnung in der Wand des Mantels angeordnet ist und diese Öffnung kontinuierlich oder nicht-kontinuierlich offen ist.

2. Verfahren nach Anspruch 1, dadurch gekennzeichnet, daß der trockene Gasstrom durch Austritt eines Gasflusses im Inneren des Mantels in der Nähe der Form gebildet wird, wobei der Gasfluß einen Taupunkt aufweist, der niederiger liegt als die Temperatur der Form, und in Richtung auf deren Wände ausgerichtet wird.

3. Verfahren nach Anspruch 1 oder 2, dadurch gekennzeichnet, daß das Gas, das zum Herstellen des Gasflusses benutzt wird, Luft oder Stickstoff ist.

4. Verfahren nach einem der Ansprüche 1 bis 3, dadurch gekennzeichnet, daß die Temperatur der Form zwischen 0 und -100°C liegt.

5. Verfahren nach einem der Ansprüche 1 bis 4, dadurch gekennzeichnet, daß man den Austritt des Gasflusses mit einem Taupunkt, der niedriger liegt als die Temperatur der Form, durch eine Verteilereinrichtung bewirkt, die in der Nähe der Form gelegen ist, wobei eine solche Anordnung erfolgt, daß man diesen Gasfluß aufteilt und in Richtung der Wände der Form lenkt.

6. Verfahren nach einem der Ansprüche 1 bis 5, dadurch gekennzeichnet, daß man ständig die Austrittsöffnung offenhält, die einen mittleren Durchsatz an Gas sicherstellt, der ausreicht, um das Ausströmen des trockenen Gasstromes in der Nähe der Form einzuregulieren, und daß man diese Öffnung benutzt, um rohe Vorformlinge aus dem Mantel nach außen zu überführen.

7. Verfahren nach Anspruch 6, dadurch gekennzeichnet, daß man die Öffnung, die ständig offen ist, um das Ausströmen des Gasstromes einzuregulieren und um die Überführung der rohen Vorformlinge zur Außenseite des Mantels sicherzustellen, im unteren Teil dieses Mantels anordnet, und daß man sie mit einer Rutsche verbindet, die im Inneren des Mantels liegt und derart angeordnet ist, daß sie in ihrem oberen Teil den rohen Vorformling aufnimmt, der aus der Form ausgeworfen wurde, und daß sie ihn bei seiner Bewegung durch Schwerkrafteinwirkung bis zur Öffnung führt, die sie am Ende des Bewegungsweges kreuzt.

8. Verfahren nach einem der Ansprüche 1 bis 5, dadurch gekennzeichnet, daß man den rohen Vorformling, der aus der Form ausgeworfen wird, auf einer Aufnahmeplatte aufnimmt, mittels deren man dann seine Überführung zur Außenseite durch Durchtritt durch eine Austrittsöffnung hindurch bewirkt, die man nichtkontinuierlich öffnet, um zu gestatten, daß sie durch den rohen Vorformling durchquert wird.

9. Verfahren nach Anspruch 8, dadurch gekennzeichnet, daß man die Aufnahmeplatte mit Dämpfungsmitteln versieht, die es gestatten, den Aufprall des rohen Vorformlings auf die Aufnahmeplatte zu verringern.

10. Verfahren nach Anspruch 8 oder 9, dadurch gekennzeichnet, daß man Hubmittel benutzt, um den vertikalen Abstand zwischen der Aufnahmeplatte und der Auswurfzone des rohen Vorformlings zu verringern um dessen Aufprall auf die Aufnahmeplatte zu verringern.

11. Verfahren nach Anspruch 8 oder 9, dadurch gekennzeichnet, daß man die Überführung des rohen Vorformlings zur Außenseite des Mantels dadurch bewirkt, daß man die Aunahmeplatte aus diesem Mantel während der Zeit austreten läßt, die notwendig ist, um diesen rohen Vorformling abzunehmen, und daß man dann diese Aufnahmeplatte zu ihrer Ausgangslage zurückbringt, wobei es ein verschiebliches Sperrglied gestattet, die Gasverluste zur Aussenseite hin zu verringern, wenn sich die Aufnahmeplatte entweder in ihrer Ausgangslage zur Aufnahme des rohen Vorformlings oder in ihrer äußeren Lage zum Abnehmen des Rohlings befindet.

12. Verfahren nach Anspruch 8 oder 9, dadurch gekennzeichnet, daß man die Überführung des rohen Vorformlings bis zur Außenseite des Mantels durch Überführung der Aufnahmeplatte bis zu einer Stelle bewirkt, die unter einer Austrittsöffnung aus dem Mantel gelegen ist und mit einem Deckel versehen ist, daß man dann den oberen Rand der Platte gegen die Zone anlegt, die die Öffnung umgibt, um den rohen Vorformling nach dem Anheben des Deckels anzuheben, und daß man dann die Aufnahmeplatte in ihre Ausgangslage zurückbringt.

13. Verfahren nach Anspruch 12, dadurch gekennzeichnet, daß man einen Strom eines trockenen Gases von unten nach oben um den rohen Vorformling strömen läßt, der auf der Aufnahmeplatte vorliegt, und zwar mindestens während der Zeit, in der sich dieser rohe Vorformling vor dem Verlassen der Aufnahmeplatte in Berührung mit der Außenluft befindet.

14. Verfahren nach einem der Ansprüche 12 oder 13, dadurch gekennzeichnet, daß der Deckel der Öffnung, die es gestattet, den rohen Vorformling von der Aufnahmeplatte zu entnehmen, mit einem Rohr zum Heranbringen eines trockenen Gases versehen ist, das es gestattet, eine Spülung der Oberfläche der Aufnahmeplatte nach dem Abheben des rohen Vorformlings und vor der Rückkehr in ihre Ausgangslage zu bewirken.

15. Verfahren nach Anspruch 12 oder 13, dadurch gekennzeichnet, daß der Deckel der Öffnung, die es gestattet, den rohen Vorformling von der Aufnahmeplatte zu entnehmen, ein Saugrohr aufweist, das es nach dem Schließen des Deckels gestattet, das Gas anzusaugen, das auf der Aufnahmeplatte vorliegt.

16. Verfahren nach einem der Ansprüche 8 bis 15, dadurch gekennzeichnet, daß der Mantel zusätzlich zur Austrittsöffnung, die für den Durchtritt des rohen Vorformlings nicht-kontinuierlich geöffnet ist, mindestens eine zweite Austrittsöffnung aufweist, die durch Durchsatz-Reguliermittel gesteuert ist und es gestattet, den Gasstrom im Bereich der Form einzuregulieren und einen Überdruck im Mantel zwischen bestimmten Grenzen aufrechtzuerhalten.

17. Verfahren nach Anspruch 16, dadurch gekennzeichnet, daß man automatische Mittel zum Steuern des Drucks im Inneren des Mantels benutzt, sowie Mittel zur Steuerung des Durchsatzes an trockenem Gas, der in der Austrittszone in der Nähe der Form eingeleitet wird, sowie Mittel zum Steuern des Durchsatzes an trockenem Gas, das in die Aufnahmeplatte eingeleitet wird, und andere Mittel, die es gestatten, den Durchsatz des Gasaustritts aus dem Mantel auf Höhe der regulierbaren Austrittsöffnung zu messen, um automatisch den Durchsatz dieser Austrittsöffnung einzustellen, um den Druck im Inneren des Mantels in bestimmten Grenzen zu halten, indem man gleichzeitig einen regelmäßigen Gasstrom im Bereich der Form sicherstellt und indem man die Gasaustritte berücksichtigt, die sich im Augenblick des Anhebens des Vorformlings von der Aufnahmeplatte bei jedem Betriebszyklus ergeben.

18. Vorrichtung, die die Formung roher Vorformlinge durch Einspritzen und Verfestigen von Schlicker in eine Form gestattet, wobei dieser Schlicker eine Mischung aus einer festen Phase aufweist, die mindestens ein Metall- oder Keramik-Pulver enthält, das sich in Suspension in einer Flüssigkeit befindet, wobei die Form (1, 2) auf eine Temperatur unter 0°C abgekühlt wird und mindestens einen beweglichen Teil (2), der Mittel wie beispielsweise einen Hubzylinder (7), gegen den festen Teil (1) während der Einspritzung und Verfestigung angedrückt hält, dadurch gekennzeichnet, daß sie einen Mantel (8) aufweist, der die festen und beweglichen Teile der Form sowie die beweglichen Teile der Mittel zum Öffnen und Schließen sowie die Mittel zum Auswerfen, zur Aufnahme und zur Überführung roher Vorformlinge in Richtung zur Außenseite des Mantels umgibt, und daß sie mindestens eine Verteilereinrichtung (13) für gasförmiges Strömungsmittel mit einem Taupunkt aufweist, der niedriger liegt als die Benutzungstemperatur der Form, die im Inneren des Mantels angeordnet ist, mindestens eine Öffnung (11) die durch die Wand des Mantels hindurchgehend ausgebildet ist, kontinuierlich oder nicht-kontinuierlich offen ist und die Entnahme der rohen Vorformlinge nach außen gestattet, wobei eine gasförmige Strömungsmittelmenge, die durch die Verteilereinrichtung eingeleitet wird, imstande ist, durch diese Öffnung zu entweichen, und eine Gasatmosphäre mit einem Taupunkt, der niedriger liegt als die Temperatur der Form, die in der Nähe der Wände der Form hergestellt ist.

19. Vorrichtung nach Anspruch 18, dadurch gekennzeichnet, daß das Abkühlen des festen und beweglichen Teils (1, 2) der Form durch ein Wärmeübertragungs-Strömungsmittel bewirkt wird, das durch eine Kälteeinrichtung abgekühlt wird, die außerhalb des Mantels (8) angeordnet ist, und das im Inneren der beiden Teile der Form umläuft.

20. Vorrichtung nach Anspruch 18 oder 19, dadurch gekennzeichnet, daß die Öffnung (11), die in der Wand (8) des Mantels ausgebildet ist, mit einer Rutsche (9) verbunden ist, die die rohen Vorformlinge (10) aufnimmt, die von der Form ausgeworfen werden, und ihre Überführung durch Schwerkraftwirkung bis zur Außenseite des Mantels gestattet.

21. Vorrichtung nach Anspruch 18 oder 19, dadurch gekennzeichnet, daß der rohe Vorformling (10) im Augenblick seines Auswurfes von einer Aufnahmeplatte (25, 40, 51, 78, 93) aufgenommen wird.

22. Vorrichtung nach Anspruch 21, dadurch gekennzeichnet, daß die Aufnahmeplatte mit Stoßdämpfungsmitteln (26, 41, 52, 81, 94) versehen ist.

23. Vorrichtung nach Anspruch 22, dadurch gekennzeichnet, daß die Stoßdämpfungsmittel (26, 41, 52, 81, 94) eine Aufnahmefläche sind, die verformbar ist, durchlässig ist und dazu eingerichtet ist, von unten nach oben von einem Gasstrom durchquert zu werden, der sie elastisch aufbläst.

24. Vorrichtung nach einem der Ansprüche 21 bis 23, dadurch gekennzeichnet, daß Hubmittel (55) es gestatten, die Aufnahmeplatte anzuheben, um sie an den Auswurfpunkt des rohen Vorformlings (10) anzunähern.

25. Vorrichtung nach einem der Ansprüche 21 bis 23, dadurch gekennzeichnet, daß die Aufnahmeplatte (25) für den rohen Vorformling (10) in einer verschieblichen Schublade (30) angebracht ist, die den Mantel (8) durch eine Öffnung durchquert, die mit einer Dichtung (32) versehen ist, und zwar derart, daß die Überführung der Aufnahmeplatte, die mit dem rohen Vorformling (10) beladen ist, zur Außenseite des Mantels (8) gestattet ist.

26. Vorrichtung nach einem der Ansprüche 21 bis 23, dadurch gekennzeichnet, daß die Aufnahmeplatte (40) Verlagerungsmittel aufweist, die es nach der Aufnahme des rohen Vorformlings (10) gestatten, die Aufnahmeplatte (10) gegen eine Öffnung (48, 60, 83, 102) anzulegen, die mit einer beweglichen Abdeckeinrichtung (50, 62, 84, 103) versehen ist.

27. Vorrichtung nach einem der Ansprüche 21 bis 23, dadurch gekennzeichnet, daß sie eine feste Gleitbahn (92) aufweist, daß die Aufnahmeplatte (93) in der Lage ist, in dieser durch geeignete Mittel versetzt zu werden, und daß die feste Gleitbahn (92) in ihrem Endbereich Mittel (100) aufweist, um die Aufnahmeplatte (93) in dichte Anlage gegen den Bereich zu verbringen, der die Öffnung (102) umgibt, die mit einem dichten Deckel (102) verschlossen ist.

28. Vorrichtung nach einem der Ansprüche 21 bis 27, dadurch gekennzeichnet, daß sie eine Öffnung zum ständigen Austritt von Gas im Mantel zusätzlich zur Öffnung aufweist, die die Abführung der rohen Vorformlinge nach außen gestattet.

29. Vorrichtung nach einem der Ansprüche 21 bis 28, dadurch gekennzeichnet, daß sie automatische Mittel aufweist, um einen Betriebszyklus durchzuführen, mit den Vorgängen des Einspritzens des Schlickers in die Form (1, 2), des Haltens der Form in geschlossener Lage durch den Kolben (6), dann des Öffnens der Form nach der Verfestigung des rohen Vorformlings (10), dann dessen Auswurf und Aufnahme durch die Aufnahmeplatte (25, 40, 51, 78, 93), dann der Überführung dieser Platte bis in die Lage zur Entnahme des Vorformlings (10), und dann der Rückführung dieser Aufnahmeplatte in ihre Ausgangslage.

30. Vorrichtung nach Anspruch 28, dadurch gekennzeichnet, daß sie automatische Mittel zur Regulierung des Durchsatzes der Gasaustrittsöffnung aufweist, und zwar durch die regulierbare Öffnung (33, 39, 59, 86, 91) für den Durchtritt dieses Gases, die es gestatten, einen Überdruck im Inneren des Mantels (8) innerhalb bestimmter Grenzen aufrechtzuerhalten.
